# EUROPEAN PATENT SPECIFICATION

(11) **EP 2 069 644 B1**
(45) Date of publication and mention of the grant of the patent: **22.08.2018**
(21) Application number: 07800266.4
(22) Date of filing: 05.09.2007
(51) Int. Cl.: E04B 1/38, B25C 1/08, F16B 19/14, F16B 15/00, F16B 43/00

(54) **A FASTENING PIN AND WASHER USED WITH A FASTENING TOOL TO SECURE A LAYER OF INSULATION TO A SUBSTRATE**
MIT EINEM BEFESTIGUNGSWERKZEUG VERSEHENE(R) BEFESTIGUNGSSTIFT UND UNTERLEGSCHEIBE ZUR BEFESTIGUNG EINER ISOLIERLAGE AN EINEM TRÄGER
GOUPILLE DE FIXATION ET RONDELLE UTILISÉES AVEC UN OUTIL DE FIXATION POUR FIXER UNE COUCHE D'ISOLEMENT À UN SUBSTRAT

(30) Priority: 20.09.2006 AU 2006905203; 21.12.2006 AU 2006907261
(43) Date of publication of application: 17.06.2009
(73) Proprietor: Illinois Tool Works Inc., Glenview, IL 60025 (US)
(72) Inventor: MCCULLOUGH, David, Hawthorn East, Victoria 3123 (AU)
(74) Representative: Gevers & Orès
(86) International application number: PCT/AU2007/001310
(87) International publication number: WO 2008/034167

(56) References cited:
- EP-A1- 0 926 361
- US-A- 4 932 819
- US-A- 5 261 770

## Description

The present invention relates to a fastener, and more particularly, to a fastener for fastening insulation to a substrate.

Prior art includes for instance US-A-4,932,819.

It is common in the construction of buildings to fasten a layer of insulation to an underlying substrate, for example to a ceiling. There has been previously proposed a fastener including a fastening pin within a plastic body, whereby in fastening an insulation layer to a substrate the plastic body is pushed through the layer until a forward end of the body abuts against the substrate. A fastening tool is then cocked by pushing the tool against the plastic body, and the tool is subsequently fired to drive the fastening pin through the plastic body and into the substrate. A rear end of the plastic body is formed into a washer which supports the insulation layer, and the distance between the washer and the substrate is determined by the length of the plastic body.

Relatively recently there has been an increase in the use of a type of insulation material in the form of an extruded polystyrene which is superior to other insulation materials as it is impervious to water, stronger, and does not degrade over time. The applicant has identified a disadvantage in using the previously proposed type of fastener with the stronger insulation material in that the fastener is difficult to insert in the insulation material and may cause the fastening tool to cock too early such that it is cocked prior to the fastener abutting against the substrate. This can be disadvantageous as it enables the tool to be fired prior to abutment of the fastener against the substrate which may result in the fastener being driven crooked into the substrate.

Example fasteners of the present invention seek to overcome or at least alleviate one or more disadvantages of previously proposed fasteners.

In accordance with one example of the present invention, there is provided a fastener for firing from an explosively actuated fastening tool for fastening a layer of insulation to a substrate, the fastener comprising a pin, a washer mounted on the pin in such a manner that with the washer displaced from the head of the pin, the pin of the fastener can be pushed through the insulation into contact with the substrate by pressure applied by the fastening tool against the washer and when the tip of the pin is against the substrate further pressure applied by the tool against the washer will permit cocking of the tool in preparation for firing the pin into the substrate, the connection between the washer and the shank of the pin being such as to resist displacement of the washer further towards the tip of the pin under the forces applied to penetrate the insulation and to cock the tool, and under the forces applied to the pin when the tool is fired the pin will displace forwardly relative to the washer so as to penetrate the substrate.

In accordance with another example of the present invention, there is provided a fastener for firing from an explosively actuated fastening tool for fastening a layer of insulation to a substrate, the fastener comprising a pin and a washer mounted on the pin such that the washer is in a position displaced from the head of the pin during penetration of the pin through the insulation by force applied against the washer and a position more adjacent the head of the pin when the pin has been driven into the substrate by firing of the tool, the connection between the washer and the shank of the pin being such that with the washer in its position displaced from the head of the pin it will withstand a load of at least about 30 N without displacement towards the tip of the pin whereby the tool can be cocked prior to firing by force applied against the washer when the tip of the pin is in engagement with the substrate following penetration of the insulation.

Preferably, the connection between the washer and the shank of the pin is sufficient to withstand the entire cocking force of the fastening tool applied to the washer such that the entire cocking force is transmitted to the substrate via the pin.

Preferably, the connection between the washer and the pin allows rigid coupling between the washer and pin to be maintained until firing, following which the pin is freed to slide through the washer to penetrate the substrate. More preferably, the connection includes means for holding the washer in place relative to the pin. In one example, said means for holding the washer in place relative to the pin is in the form of a knurl on the pin which engages with the washer. Alternatively, the connection may be in the form of a press fit, a groove, a further component, or some other way of holding the washer in place relative to the pin.

In a preferred form, a front end of the pin extending forwardly of the washer corresponds in length to a depth of the layer of insulation. Preferably, a portion of the front end of the pin is stepped to a reduced diameter, and the portion has a length corresponding to the depth to which the pin is to be anchored in the substrate. More preferably, the forward end is knurled to assist engagement of the pin in substrates such as, for example, timber. Knurls formed on the pin may be straight knurls or helical knurls.

The washer may be provided with one or more tabs which are folded by application of force from the fastening tool to the fastener such that the tabs abut against the pin so as to prevent rotation of the washer about the pin. In a preferred form, the tabs are located inwardly of an outside edge of the washer.

In one form, the washer is coupled to the pin to enable the washer to move freely, prior to firing, along the pin between the head of the pin and the position displaced from the head of the pin, the fastener having means for restricting movement of the washer forward of said position to enable the cocking force to be transmitted from the fastening tool to the substrate via the pin. More preferably, said means for restricting movement of the washer forward of said position is an enlargement in profile of the pin at that position.

Alternatively, the fastener is adapted to provide continuous resistance between the position displaced from the head of the pin and the head of the pin, to provide resistance between the washer and the pin so as to prevent the washer sliding toward the head of the pin. More preferably, the fastener is adapted to provide the resistance by the profile of the pin being progressively outwardly tapered between the position displaced from the head of the pin and the head of the pin.

In a preferred example, the washer has perforations and/or protrusions to assist adhesion of render when the material being fastened is to be subsequently rendered.

In one form, the fastener is suitable for use with a gas powered fastening tool, and the pin and washer are arranged to be capable of transmitting the cocking force of the gas powered fastening tool between the fastening tool and the substrate via the pin. More preferably, the pin and washer are arranged to be capable of transmitting the cocking force in the range of 30N to 70N between the fastening tool and the substrate via the pin.

In another form, the fastener is suitable for use with both a gas powered fastening tool and a powder actuated fastening tool, and the pin and washer are arranged to be capable of transmitting the cocking force of the gas powered fastening tool and the cocking force of the powder actuated fastening tool between the fastening tool and the substrate via the pin. More preferably, the pin and washer are arranged to be capable of transmitting the cocking force in the range of 50N to 160N between the fastening tool and the substrate via the pin.

The invention will now be described by way of example only with reference to the accompanying drawings in which:
Figure 1 is a perspective view of a fastener in accordance with an example of the invention;
Figure 2 is a side diagrammatic view of the fastener of Figure 1;
Figure 3 is a longitudinal cross-sectional view of the fastener of Figures 1 and 2 shown coupled to a fastening tool prior to fastening;
Figure 4 is a longitudinal cross-sectional view of the fastener of Figures 1 to 3, shown with a tip of a fastener pin abutting a material to be fastened to a substrate;
Figure 5 is a longitudinal cross-sectional view of the fastener of Figures 1 to 4, shown with a tip of the fastener pin abutting the substrate;
Figure 6 is a longitudinal cross-sectional view of the fastener of Figures 1 to 5, shown anchored in the substrate, prior to removal of the fastening tool;

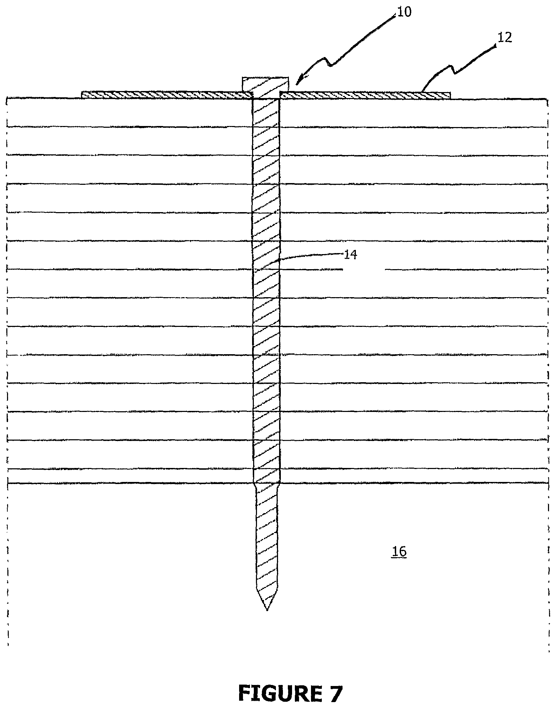

Figure 7 is a longitudinal cross-sectional view of the fastener of Figures 1 to 6, shown anchored in the substrate, after removal of the fastening tool;
Figure 8 is a perspective view of a fastener in accordance with another example of the invention; and
Figure 9 is a side diagrammatic view of a fastener in accordance with yet another example of the invention.

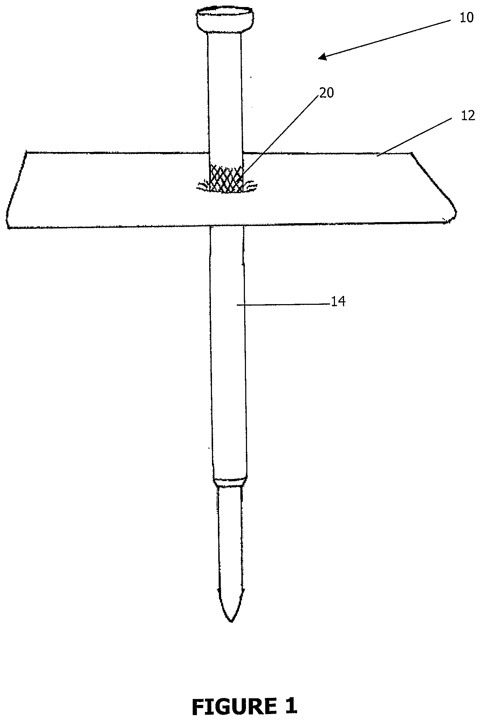

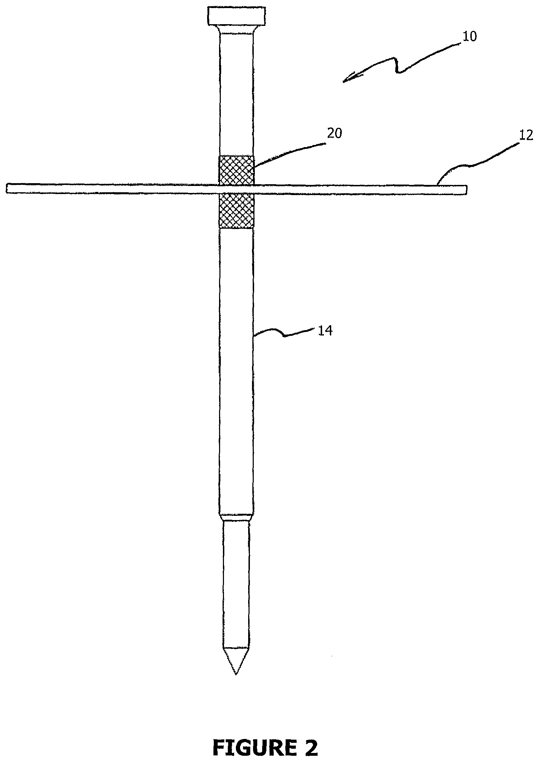

With reference to Figures 1 to 5, a fastener 10 in accordance with an example of the invention includes a washer 12 and a pin 14. The fastener 10 is adapted to be fired into a substrate 16 from an explosively actuated fastening tool 18 which is firstly cocked for firing by applying a cocking force onto the fastener 10 and against the substrate 16, The pin 14 and washer 12 are arranged such that the cocking force is transmitted via the pin 14.

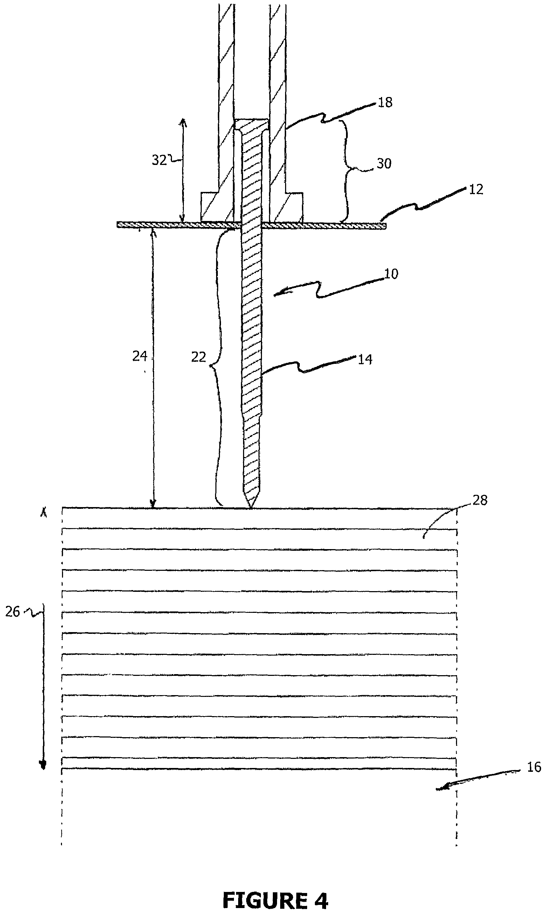

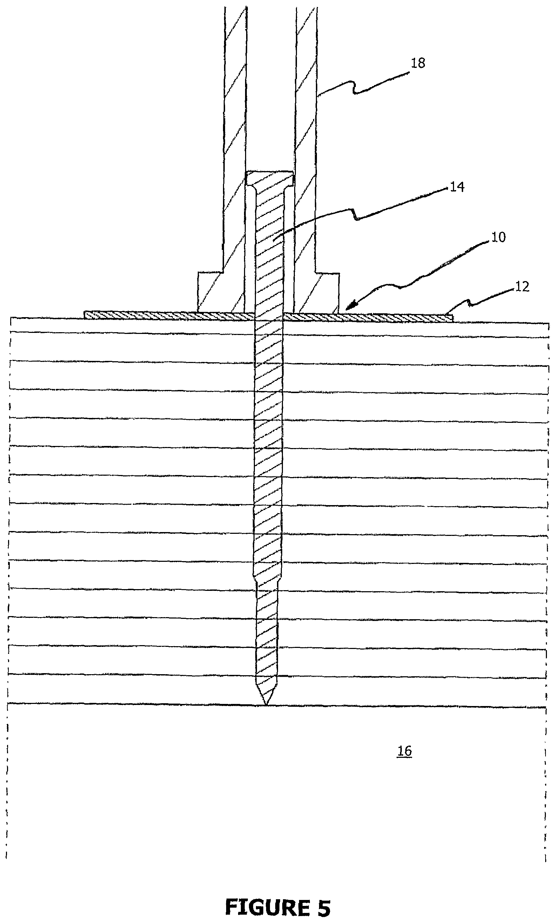

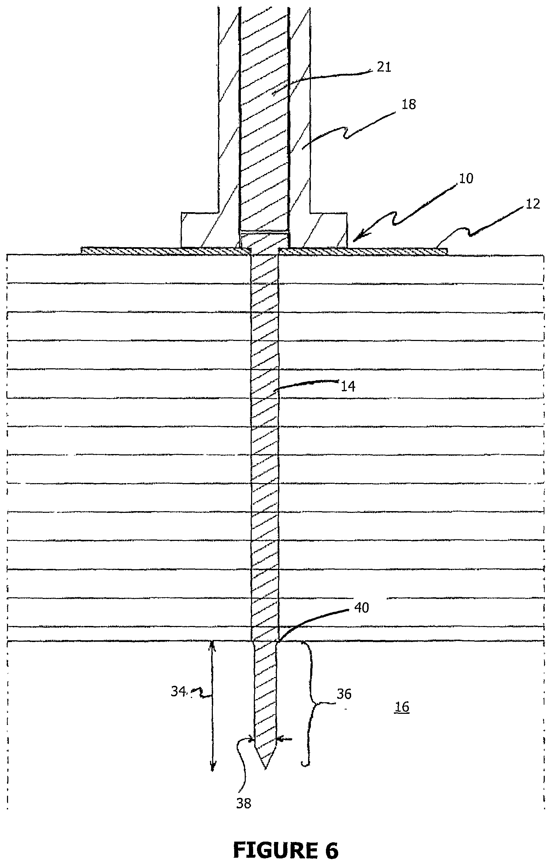

The fastener 10 is adapted for firing from the fastening tool 18 for fastening a layer of insulation 28 to the substrate 16, with the washer 12 mounted on the pin 14 in such a manner that with the washer 12 in a position displaced from the head of the pin 14 (as shown in Figure 4), the pin 14 can be pushed through the insulation 28 into contact with the substrate 16 by pressure applied by the fastening tool 18 against the washer 12. When the tip of the pin 14 is against the substrate 16 (see Figure 5), further pressure applied by the tool 18 against the washer 12 will permit cocking of the tool 18 in preparation for firing the pin 14 into the substrate 16. A connection 20 between the washer 12 and the shank of the pin 14 is such as to resist displacement of the washer 12 further towards the tip of the pin 14 under the forces applied to penetrate the insulation 28 and to cock the tool 18, and, under the forces applied to the pin 14 when the tool 18 is fired, the pin 14 will displace forwardly relative to the washer 12 so as to penetrate the substrate 16. When the pin 14 has been driven into the substrate 16 by firing of the tool 18, after forward displacement of the pin 14 relative to the washer 12, the washer 12 is in a position abutting or at least more adjacent the head of the pin 14 (as shown in Figure 6).

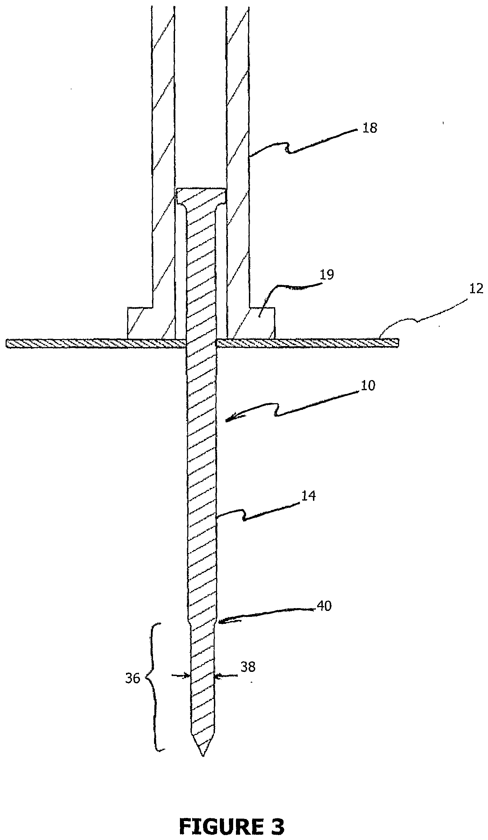

The washer 12 is adapted for coupling the fastener 10 to a muzzle 19 of the fastening tool 18 (see Figure 3) such that, once coupled, the fastener 10 can be located in a position ready for firing wherein a tip of the pin 14 abuts the substrate 16 (see Figure 5) by manipulating the fastening tool 18. In the particular example shown, the washer 12 is metallic and is held in place on the muzzle 19 by virtue of the muzzle 19 being magnetic, however it will be understood by those skilled in the art that alternatives may be used for coupling the fastener 10 to the fastening tool 18. The fastener 10 is configured so that the head of the pin 14 can be housed in the muzzle 19 prior to firing, with the washer 12 abutting the muzzle 19 to facilitate transfer of the cocking force from the tool 18 to the fastener 10.

The connection 20 between the washer 12 and the shank of the pin 14 allows for rigid coupling between the washer 12 and pin 14 to be maintained until firing of the fastening tool 18, at which time a firing pin 21 (see Figure 6) of the fastening tool 18 drives the pin 14 such that it is freed to slide through the washer 12 to penetrate the substrate 16. The connection 20 may include means for holding the washer 12 in place relative to the pin 14. In the example shown, the means for holding the washer 12 in place relative to the pin 14 is in the form of a knurl which engages the washer 12 so as to prevent the washer 12 sliding relative to the pin 14 prior to firing of the fastening tool 18.

With reference to Figures 4 and 5, the fastener 10 is able to be pushed through the layer of insulation material 28 by applying force from the fastening tool 18 to the washer 12 which, in turn, transmits force via the connection 20 to the pin 14 such that the pin 14 is brought to abut against the substrate 16. With further application of force to the fastening tool 18, the cocking force is then transmitted from the fastening tool 18 to the washer 12 and, in turn, from the washer 12 to the pin 14 as it abuts against the substrate 16. Once cocked, the tool 18 is ready to fire, and the force from actuation of the tool 18 is sufficiently high to overcome the connection 20 between the washer 12 and the pin 14 so as to drive the pin 14 into the substrate as shown in Figure 6.

Cocking force for a gas powered tool is generally within the range from 3kg to 7kg (30 to 70N) and cocking force for powder actuated tools is generally within the range from 5kg to 16kg (50 to 160N). Although it is foreseen that the fastener 10 would be for use primarily with gas powered tools, examples of fasteners may be used with either gas powered tools or powder actuated tools provided the connection retains the washer to the pin sufficiently such that an above-threshold force greater than the cocking force for both types of tool is required to slide the washer relative to the pin. Alternatively, a fastener for use with only gas powered tools need only have a connection which retains the washer to the pin sufficiently such that an above-threshold force greater than the cocking force of gas powered tools is required to slide the washer relative to the pin.

A front end 22 of the pin 14 extending forwardly of the washer 12 corresponds in length 24 to a depth 26 of the material 28 to be fastened to the substrate 16 by way of the fastener 10.

A rear end 30 of the pin 14 extending rearwardly of the washer 12 corresponds in length 32 to a depth 34 (see Figure 6) to which the pin 14 is to be anchored in the substrate 16.

A portion 36 of the front end 22 of the pin 14 is stepped at a location 40 to a reduced diameter 38, and the portion 36 has a length corresponding to the depth 34 to which the pin 14 is to be anchored in the substrate 16.

Although in the example shown the connection 20 includes means for holding the washer 12 in place relative to the pin 14 in the form of a knurl on the pin 14 which engages the washer 12, in alternative examples said means may take other forms such as, for example, a press fit, an interference fit, a groove in the pin, a further component, a glued connection, or some other way of holding the washer 12 in place relative to the pin 14.

In another variant, the connection may allow the washer 12 to "float" between a point on the pin intermediate the ends of the pin, and the head of the pin. In such a variant the fastener has a means for restricting movement of the washer forward of said point, so as to enable the cocking force to be transmitted from the fastening tool to the substrate via the pin, with the washer located at said point where it is able to transmit longitudinal force to the pin. More specifically, the cocking force is transmitted from the fastening tool to the washer and from the washer to the pin which abuts the substrate. The means for restricting movement of the washer forward of said point may be in the form of a stepping or other enlargement in the profile of the pin at that point, whereby the cross-sectional area of the pin is enlarged such that a threshold force must be applied to the washer in order to move the washer forward of said point, the threshold force being larger than a cocking force of the fastening tool.

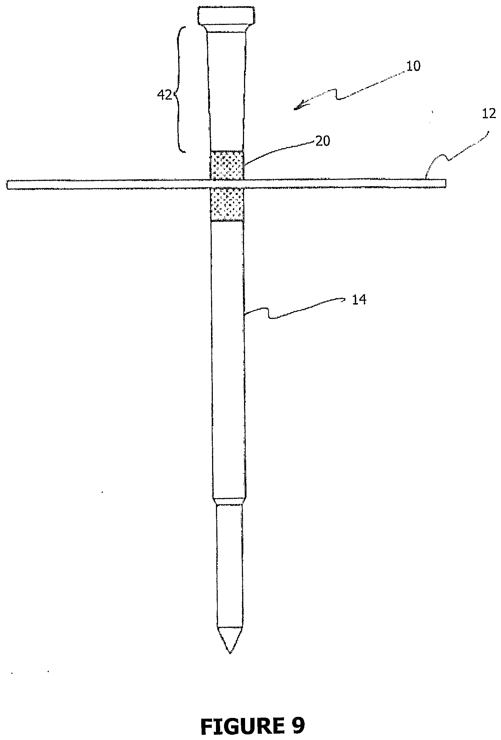

Referring to Figure 9, in yet another variant, the profile of the pin 14 is progressively outwardly tapered in a region 42 between the location on the pin 14 where the washer 12 is located prior to fastening and the head of the pin 14. The outward tapering of the pin 14 causes continuous resistance between the washer 12 and the pin 14 over the tapered region 42 so as to prevent the washer 12 sliding toward the head of the pin 14. In use, for example, this ensures that a layer of insulation material fastened to a substrate (eg. a ceiling) by the fastener 10 is not permitted to rest away from the substrate, even if the head of the pin 14 is not fully brought into abutment with the washer 12 during fastening. Advantageously, the outward tapering of the pin 14 may also serve to prevent the washer 12 from rotating about the pin 14, and will increase resistance of the pin 14 to column collapse. Increased resistance of the pin 14 to column collapse may be particularly advantageous where the fastener 10 is to be fired from a powder actuated tool, as such tools are prone to exerting excessive force owing to absence of automatic power adjustment provided in gas powered tools.

As an alternative to tapering the pin 14, resistance between the washer 12 and the pin 14 may be introduced by extending the knurl used at the connection 20 to the head of the pin 14.

Resistance between the washer 12 and the pin 14 may also be introduced by providing the washer 12 with one or more tabs which are folded by application of force from the fastening tool to the fastener 10 such that the tabs abut against the pin 14 to prevent rotation of the washer 12 about the pin 14. The tabs may be located inwardly of an outside edge of the washer 12 to prevent the washer 12 from damaging any soft foil and the like which may be present on insulating material being fastened.

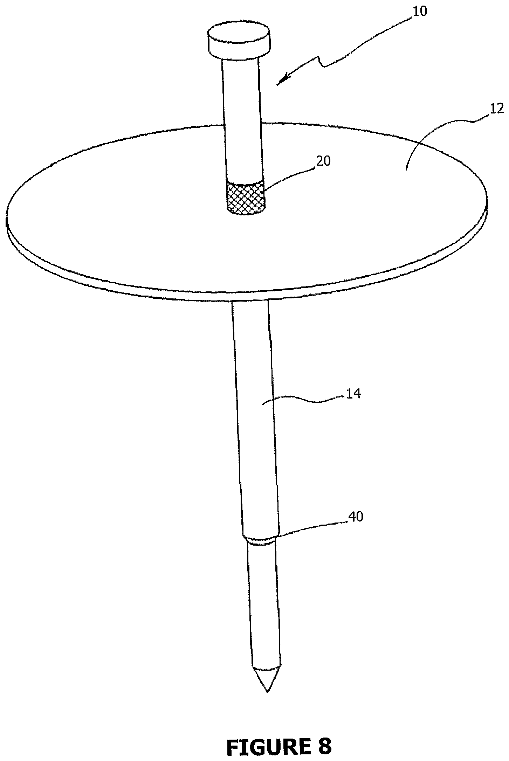

The fastener particularly described is designed for use in fastening insulation material to a substrate, however it is to be understood that the fastener can be configured for use in other fastening applications. Moreover, although the washer 12 is shown in Figure 1 as being rectangular, in other examples the washer may be rounded (eg. circular as shown in Figure 8), hexagonal, octagonal or some other shape. The washer 12 may be formed of plastic or other rigid material.

The fastener has been described by way of example only and modifications are possible within the scope of the invention as defined by the appended claims. For example, although the washer 12 is depicted as being a solid disc, in other examples it may be provided with holes to reduce the bearing surface of the washer so as to assist in preventing accumulation of dew and/or moisture between the washer and an underlying material, as well as to possibly also provide improved appearance and acoustical properties. Perforations and/or protrusions formed in the washer may also assist adhesion of render when the material being fastened is to be subsequently rendered.

## Claims

1. A fastener (10) for firing from an explosively actuated fastening tool (18) for fastening a layer of insulation (28) to a substrate (16), the fastener comprising a pin (14), a washer (12) mounted on the pin in such a manner that with the washer displaced from the head of the pin, the pin of the fastener can be pushed through the insulation into contact with the substrate by pressure applied by the fastening tool against the washer and when the tip of the pin is against the substrate further pressure applied by the tool against the washer will permit cocking of the tool in preparation for firing the pin into the substrate, the connection (20) between the washer and the shank of the pin being such as to resist displacement of the washer further towards the tip of the pin under the forces applied to penetrate the insulation and to cock the tool, and under the forces applied to the pin when the tool is fired the pin will displace forwardly relative to the washer so as to penetrate the substrate.

2. A fastener (10) as claimed in claim 1, wherein the connection between the washer (12) and the shank of the pin (14) is sufficient to withstand the entire cocking force of the fastening tool (18) applied to the washer such that the entire cocking force is transmitted to the substrate via the pin.

3. The fastener (10) as claimed in any claim 1 or 2, wherein the connection (20) between the washer (12) and the pin (14) allows rigid coupling between the washer and pin to be maintained until firing, following which the pin is freed to slide through the washer to penetrate the substrate.

4. The fastener (10) as claimed in claim 3, wherein the connection (20) includes means for holding the washer in place relative to the pin.

5. The fastener (10) as claimed in claim 4, wherein said means for holding the washer (12) in place relative to the pin (14) is in the form of a knurl on the pin which engages with the washer (12).

6. The fastener (10) as claimed in any one of claims 4 to 5, wherein a front end of the pin (14) extending forwardly of the washer (12) corresponds in length to a depth of the layer of insulation (28).

7. A fastener (10) as claimed in claim 6, wherein a portion of the front end of the pin (14) is stepped to a reduced diameter, and the portion has a length corresponding to the depth to which the pin is to be anchored in the substrate.

8. A fastener as claimed in claim 6 or claim 7, wherein the forward end is knurled to assist engagement of the pin in substrates such as, for example, timber.

9. The fastener as claimed in any one of claims 1 to 8, wherein the fastener is adapted to provide continuous resistance between the position displaced from the head of the pin and the head of the pin, to provide resistance between the washer and the pin so as to prevent the washer sliding toward the head of the pin.

10. The fastener as claimed in claim 9, wherein the fastener is adapted to provide the resistance by the profile of the pin being progressively outwardly tapered between the position displaced from the head of the pin and the head of the pin.

11. The fastener as claimed in any one of claims 1 to 10, wherein the washer is provided with one or more tabs which are folded by application of force from the fastening tool to the fastener such that the tabs abut against the pin so as to prevent rotation of the washer about the pin.

12. The fastener as claimed in claim 11, wherein the tabs are located inwardly of an outside edge of the washer.

13. A fastener as claimed in claim 1, wherein the washer is coupled to the pin to enable the washer to move freely, prior to firing, along the pin between the head of the pin and the position displaced from the head of the pin, the fastener having means for restricting movement of the washer forward of said position to enable the cocking force to be transmitted from the fastening tool to the substrate via the pin.

14. A fastener as claimed in claim 13, wherein said means for restricting movement of the washer forward of said position is an enlargement in profile of the pin at that position.

15. A fastener as claimed in any one of claims 1 to 14, wherein the washer has perforations and/or protrusions to assist adhesion of render when the material being fastened is to be subsequently rendered.

16. A fastener as claimed in any one of claims 1 to 15, wherein the fastener is suitable for use with a gas powered fastening tool, and the pin and washer are arranged to be capable of transmitting the cocking force of the gas powered fastening tool between the fastening tool and the substrate via the pin.

17. A fastener as claimed in claim 16, wherein the pin and washer are arranged to be capable of transmitting the cocking force in the range of 30N to 70N between the fastening tool and the substrate via the pin.

18. A fastener as claimed in any one of claims 1 to 15, wherein the fastener is suitable for use with both a gas powered fastening tool and a powder actuated fastening tool, and the pin and washer are arranged to be capable of transmitting the cocking force of the gas powered fastening tool and the cocking force of the powder actuated fastening tool between the fastening tool and the substrate via the pin.

19. A fastener as claimed in claim 18, wherein the pin and washer are arranged to be capable of transmitting the cocking force in the range of 50N to 160N between the fastening tool and the substrate via the pin.

## Patentansprüche

1. Befestigungsvorrichtung (10) zum Abfeuern aus einem explosionsartig betätigten Befestigungswerkzeug (18), um eine Isolierlage (28) an einem Träger (16) zu befestigen, wobei die Befestigungsvorrichtung einen Stift (14) und eine Unterlegscheibe (12) umfasst, die auf eine solche Weise an dem Stift befestigt ist, dass, wenn die Unterlegscheibe von dem Kopf des Stifts weg verlagert ist, der Stift der Befestigungsvorrichtung durch die Isolierung in Kontakt mit dem Träger durch einen durch das Befestigungswerkzeug gegen die Unterlegscheibe ausgeübten Druck gestoßen werden kann, und wenn die Spitze des Stifts an dem Träger anliegt, ein weiterer durch das Werkzeug gegen die Unterlegscheibe ausgeübter Druck ein Spannen des Werkzeugs als Vorbereitung für das Abfeuern des Stifts in den Träger ermöglicht, wobei die Verbindung (20) zwischen der Unterlegscheibe und dem Schaft des Stifts derart ist, dass sie einer weiteren Verlagerung der Unterlegscheibe zu der Spitze des Stifts unter den Kräften widersteht, die ausgeübt werden, um die Isolierung zu durchdringen und das Werkzeug zu spannen, und sich der Stift unter den Kräften, die bei Abfeuern des Werkzeugs auf den Stift ausgeübt werden, relativ zu der Unterlegscheibe nach vorne verlagern wird, um den Träger zu durchdringen.

2. Befestigungsvorrichtung (10) nach Anspruch 1, wobei die Verbindung zwischen der Unterlegscheibe (12) und dem Schaft des Stifts (14) ausreicht, um der gesamten auf die Unterlegscheibe ausgeübten Spannkraft des Befestigungswerkzeugs (18) auf eine solche Weise zu widerstehen, dass die gesamte Spannkraft über den Stift auf den Träger übertragen wird.

3. Befestigungsvorrichtung (10) nach Anspruch 1 oder 2, wobei es die Verbindung (20) zwischen der Unterlegscheibe (12) und dem Stift (14) ermöglicht, dass eine feste Koppelung zwischen der Unterlegscheibe und dem Stift bis zum Abfeuern aufrechterhalten wird, wobei anschließend der Stift freigesetzt wird, damit er sich durch die Unterlegscheibe schiebt und den Träger durchdringt.

4. Befestigungsvorrichtung (10) nach Anspruch 3, wobei die Verbindung (20) ein Mittel umfasst, um die Unterlegscheibe relativ zu dem Stift an Ort und Stelle zu halten.

5. Befestigungsvorrichtung (10) nach Anspruch 4, wobei das Mittel zum Halten der Unterlegscheibe (12) an Ort und Stelle relativ zu dem Stift (14) in Form einer Rändelung an dem Stift vorliegt, die mit der Unterlegscheibe (12) eingreift.

6. Befestigungsvorrichtung (10) nach einem der Ansprüche 4 bis 5, wobei ein vorderes Ende des Stifts (14), das sich nach vorne von der Unterlegscheibe (12) erstreckt, in der Länge einer Tiefe der Isolierlage (28) entspricht.

7. Befestigungsvorrichtung (10) nach Anspruch 6, wobei ein Abschnitt des vorderen Endes des Stifts (14) auf einen geringeren Durchmesser abgestuft ist und der Abschnitt eine Länge aufweist, die der Tiefe entspricht, bis zu der der Stift in dem Träger verankert werden soll.

8. Befestigungsvorrichtung nach Anspruch 6 oder Anspruch 7, wobei das vordere Ende gerändelt ist, um das Eingreifen des Stifts in Träger, wie zum Beispiel Holz, zu unterstützen.

9. Befestigungsvorrichtung nach einem der Ansprüche 1 bis 8, wobei die Befestigungsvorrichtung geeignet ist, einen andauernden Widerstand zwischen der von dem Kopf des Stifts weg verlagerten Position und dem Kopf des Stifts bereitzustellen, um einen Widerstand zwischen der Unterlegscheibe und dem Stift bereitzustellen, um so zu verhindern, dass sich die Unterlegscheibe zu dem Kopf des Stifts schiebt.

10. Befestigungsvorrichtung nach Anspruch 9, wobei die Befestigungsvorrichtung geeignet ist, den Widerstand dadurch bereitzustellen, dass sich das Profil des Stifts zwischen der von dem Kopf des Stifts weg verlagerten Position und dem Kopf des Stifts zunehmend nach außen verjüngt.

11. Befestigungsvorrichtung nach einem der Ansprüche 1 bis 10, wobei die Unterlegscheibe mit einer oder mehreren Laschen versehen ist, die durch Ausübung einer Kraft auf eine solche Weise von dem Befestigungswerkzeug zu der Befestigungsvorrichtung abgekantet werden, dass die Laschen an dem Stift anliegen, um eine Drehung der Unterlegscheibe um den Stift zu verhindern.

12. Befestigungsvorrichtung nach Anspruch 11, wobei sich die Laschen einwärts von einem Außenrand der Unterlegscheibe befinden.

13. Befestigungsvorrichtung nach Anspruch 1, wobei die Unterlegscheibe an den Stift gekoppelt ist, um zu ermöglichen, dass sich die Unterlegscheibe vor dem Abfeuern entlang dem Stift zwischen dem Kopf des Stifts und der von dem Kopf des Stifts weg verlagerten Position frei bewegen kann, wobei die Befestigungsvorrichtung ein Mittel aufweist, um eine Bewegung der Unterlegscheibe vor der Position zu begrenzen, um zu ermöglichen, dass die Spannkraft von dem Befestigungswerkzeug über den Stift zu dem Träger übertragen werden kann.

14. Befestigungsvorrichtung nach Anspruch 13, wobei das Mittel zum Begrenzen einer Bewegung der Unterlegscheibe vor der Position eine Vergrößerung des Profils des Stifts an dieser Position ist.

15. Befestigungsvorrichtung nach einem der Ansprüche 1 bis 14, wobei die Unterlegscheibe Durchbrüche und/oder Vorsprünge aufweist, um die Render-Haftkraft zu unterstützen, wenn das zu befestigende Material anschließend gerendert werden soll.

16. Befestigungsvorrichtung nach einem der Ansprüche 1 bis 15, wobei die Befestigungsvorrichtung geeignet ist, mit einem gasbetriebenen Befestigungswerkzeug verwendet zu werden, und der Stift und die Unterlegscheibe so angeordnet sind, dass sie in der Lage sind, die Spannkraft des gasbetriebenen Befestigungswerkzeugs zwischen dem Befestigungswerkzeug und dem Träger über den Stift zu übertragen.

17. Befestigungsvorrichtung nach Anspruch 16, wobei der Stift und die Unterlegscheibe so angeordnet sind, dass sie in der Lage sind, die Spannkraft im Bereich von 30 N bis 70 N zwischen dem Befestigungswerkzeug und dem Träger über den Stift zu übertragen.

18. Befestigungsvorrichtung nach einem der Ansprüche 1 bis 15, wobei die Befestigungsvorrichtung geeignet ist, sowohl mit einem gasbetriebenen Befestigungswerkzeug als auch einem pulverbetätigten Befestigungswerkzeug verwendet zu werden, und der Stift und die Unterlegscheibe so angeordnet sind, dass sie in der Lage sind, die Spannkraft des gasbetriebenen Befestigungswerkzeugs und die Spannkraft des pulverbetätigten Befestigungswerkzeugs zwischen dem Befestigungswerkzeug und dem Träger über den Stift zu übertragen.

19. Befestigungsvorrichtung nach Anspruch 18, wobei der Stift und die Unterlegscheibe so angeordnet sind, dass sie in der Lage sind, die Spannkraft im Bereich von 50 N bis 160 N zwischen dem Befestigungswerkzeug und dem Träger über den Stift zu übertragen.

## Revendications

1. Élément de fixation (10) destiné à être éjecté à partir d'un outil de fixation à explosion (18) servant à fixer une couche d'isolant (28) à un substrat (16), l'élément de fixation comprenant une cheville (14), une rondelle (12) installée sur la cheville de telle sorte que, la rondelle étant écartée vis-à-vis de la tête de la cheville, la cheville de l'élément de fixation puisse être poussée à travers l'isolant de façon à venir en contact avec le substrat par une pression appliquée par l'outil de fixation contre la rondelle et lorsque la pointe de la cheville se trouve contre le substrat, une pression supplémentaire appliquée par l'outil contre la rondelle permettra l'armement de l'outil en préparation pour l'éjection de la cheville dans le substrat, le raccordement (20) entre la rondelle et la tige de la cheville étant tel qu'il s'oppose à un déplacement de la rondelle qui la rapprocherait de la pointe de la cheville sous les forces appliquées pour pénétrer l'isolant et pour armer l'outil, et sous les forces appliquées à la cheville lorsque l'outil est actionné, la cheville se déplacera vers l'avant par rapport à la rondelle de façon à pénétrer dans le substrat.

2. Élément de fixation (10) selon la revendication 1, dans lequel le raccordement entre la rondelle (12) et la tige de la cheville (14) est suffisant pour résister à la totalité de la force d'armement de l'outil de fixation (18) appliquée à la rondelle de telle sorte que la totalité de la force d'armement soit transmise au substrat par le biais de la cheville.

3. Élément de fixation (10) selon la revendication 1 ou 2, dans lequel le raccordement (20) entre la rondelle (12) et la cheville (14) permet le maintien d'un accouplement rigide entre la rondelle et la cheville jusqu'à l'actionnement, à la suite de quoi la cheville est libérée de sorte qu'elle peut glisser à travers la rondelle afin de pénétrer dans le substrat.

4. Élément de fixation (10) selon la revendication 3, dans lequel le raccordement (20) comprend un moyen pour maintenir la rondelle en place par rapport à la cheville.

5. Élément de fixation (10) selon la revendication 4, dans lequel ledit moyen pour maintenir la rondelle (12) en place par rapport à la cheville (14) se présente sous la forme d'un moletage sur la cheville qui vient en prise avec la rondelle (12).

6. Élément de fixation (10) selon l'une quelconque des revendications 4 et 5, dans lequel une extrémité avant de la cheville (14) s'étendant en avant au-delà de la rondelle (12) correspond en longueur à une profondeur de la couche d'isolant (28) .

7. Élément de fixation (10) selon la revendication 6, dans lequel une partie de l'extrémité avant de la cheville (14) est dénivelée de façon à former un diamètre réduit, et la partie présente une longueur correspondant à la profondeur à laquelle la cheville est destinée à être ancrée dans le substrat.

8. Élément de fixation selon la revendication 6 ou la revendication 7, dans lequel l'extrémité avant est moletée de façon à faciliter la mise en prise de la cheville dans des substrats tels que, par exemple, du bois.

9. Élément de fixation selon l'une quelconque des revendications 1 à 8, l'élément de fixation étant conçu pour assurer une résistance continue entre l'emplacement écarté vis-à-vis de la tête de la cheville et la tête de la cheville, pour assurer une résistance entre la rondelle et la cheville de façon à empêcher la rondelle de glisser en direction de la tête de la cheville.

10. Élément de fixation selon la revendication 9, l'élément de fixation étant conçu pour assurer la résistance par le biais du profil de la cheville qui est progressivement incliné vers l'extérieur entre l'emplacement écarté vis-à-vis de la tête de la cheville et la tête de la cheville.

11. Élément de fixation selon l'une quelconque des revendications 1 à 10, dans lequel la rondelle est pourvue d'une ou de plusieurs ailettes qui sont pliées par l'application d'une force à partir de l'outil de fixation sur l'élément de fixation de telle sorte que les ailettes viennent en appui contre la cheville afin d'empêcher une rotation de la rondelle autour de la cheville.

12. Élément de fixation selon la revendication 11, dans lequel les ailettes sont positionnées intérieurement par rapport à un bord extérieur de la rondelle.

13. Élément de fixation selon la revendication 1, dans lequel la rondelle est accouplée à la cheville de façon à permettre à la rondelle de se déplacer librement, avant l'actionnement, le long de la cheville entre la tête de la cheville et l'emplacement écarté vis-à-vis de la tête de la cheville, l'élément de fixation comportant un moyen pour limiter le déplacement de la rondelle vers l'avant au-delà dudit emplacement de façon à permettre la transmission de la force d'armement de l'outil de fixation au substrat par le biais de la cheville.

14. Élément de fixation selon la revendication 13, dans lequel ledit moyen pour limiter le déplacement de la cheville en avant au-delà dudit emplacement est un élargissement dans le profil de la cheville au niveau de cet emplacement.

15. Élément de fixation selon l'une quelconque des revendications 1 à 14, dans lequel la rondelle comporte des perforations et/ou des protubérances destinées à faciliter l'adhérence d'un enduit lorsque le matériau qui est fixé est destiné à recevoir ensuite un enduit.

16. Élément de fixation selon l'une quelconque des revendications 1 à 15, l'élément de fixation étant adapté à une utilisation avec un outil de fixation à gaz, et la cheville et la rondelle étant conçues pour être aptes à transmettre la force d'armement de l'outil de fixation à gaz entre l'outil de fixation et le substrat par le biais de la cheville.

17. Élément de fixation selon la revendication 16, dans lequel la cheville et la rondelle sont conçues pour être aptes à transmettre la force d'armement dans la plage de 30N à 70N entre l'outil de fixation et le substrat par le biais de la cheville.

18. Élément de fixation selon l'une quelconque des revendications 1 à 15, l'élément de fixation étant adapté à une utilisation à la fois avec un outil de fixation à gaz et un outil de fixation à poudre, et la cheville et la rondelle étant conçues pour être aptes à transmettre la force d'armement de l'outil de fixation à gaz et la force d'armement de l'outil de fixation à poudre entre l'outil de fixation et le substrat par le biais de la cheville.

19. Élément de fixation selon la revendication 18, dans lequel la cheville et la rondelle sont conçues pour être aptes à transmettre la force d'armement dans la plage de 50N à 160N entre l'outil de fixation et le substrat par le biais de la cheville.
